# EUROPÄISCHE PATENTSCHRIFT

(11) **EP 3 456 418 B1**
(45) Veröffentlichungstag und Bekanntmachung des Hinweises auf die Patenterteilung: **09.06.2021**
(21) Anmeldenummer: 18193618.8
(22) Anmeldetag: 11.09.2018
(51) Int. Cl.: B05B 1/18, B05B 1/16, B05B 12/00, B05B 12/04

(54) **FLUIDUMSTELLVORRICHTUNG UND SANITÄRBRAUSE**
FLUID DIVERTER AND SANITARY SHOWER
DISPOSITIF DE DÉRIVATION DE FLUIDE ET DOUCHE SANITAIRE

(30) Priorität: 18.09.2017 DE 102017216491
(43) Veröffentlichungstag der Anmeldung: 20.03.2019
(73) Patentinhaber: Hansgrohe SE, 77761 Schiltach (DE)
(72) Erfinder: Kinle, Ulrich, 77773 Schenkenzell (DE); Melle, Fabian, 77799 Ortenberg (DE); Schultis, Markus, 77790 Steinach (DE)
(74) Vertreter: Patentanwälte Ruff, Wilhelm, Beier, Dauster & Partner mbB

(56) Entgegenhaltungen:
- EP-A1- 3 053 655
- CN-B- 102 688 816
- DE-A1-102006 020 765
- JP-A- 2002 165 719
- US-A1- 2010 155 639
- US-A1- 2013 327 431

## Beschreibung

Die Erfindung bezieht sich auf eine Fluidumstellvorrichtung, insbesondere für eine sanitäre Wasserauslaufarmatur, mit mindestens einem Fluideinlass und mindestens zwei Fluidauslässen, einem beweglichen Umstellkörper zur Steuerung von Fluidverbindungen der mindestens zwei Fluidauslässe mit dem mindestens einen Fluideinlass, wobei der Umstellkörper zwischen mindestens drei verschiedenen Betriebspositionen umschaltbar ist, und einer Betätigungseinrichtung, die zur sequentiell und bidirektional umschaltenden Betätigung des Umstellkörpers sowohl in einer Vorwärtsumschaltrichtung als auch in einer zur Vorwärtsumschaltrichtung inversen Rückwärtsumschaltrichtung ausgelegt ist. Weiter bezieht sich die Erfindung auf eine mit einer solchen Fluidumstellvorrichtung ausgerüstete Sanitärbrause. Bei den beiden gegensinnigen Umschaltrichtungen in Vorwärts- bzw. Rückwärtsrichtung kann es sich insbesondere um Drehrichtungen im Uhrzeigersinn bzw. Gegenuhrzeigersinn oder alternativ um entgegengerichtete translatorische Richtungen, d.h. transversale Richtungen oder Hin- und Herbewegungsrichtungen, handeln.

Mit dem Begriff Betriebspositionen sind hierbei die diskreten, stabil einstellbaren Positionen des beweglichen Umstellkörpers zu verstehen, in denen er jeweils eine gewünschte Fluidverbindungskonfiguration für seine mindestens zwei Fluidauslässe zu seinem mindestens einen Fluideinlass bereitstellt. In seinen drei oder mehr Betriebspositionen stellt der Umstellkörper entsprechend unterschiedliche Fluidverbindungskonfigurationen für die zwei oder mehr Fluidauslässe mit dem mindestens einen Fluideinlass her, beispielsweise kann die Fluidverbindung von einem jeweiligen Fluidauslass zum Fluideinlass ganz geöffnet, partiell geöffnet oder vollständig abgesperrt sein. So kann z.B. im Fall von zwei Fluidauslässen und einem Fluideinlass in einer ersten Betriebsposition des Umstellkörpers die Fluidverbindung vom Fluideinlass zum einen Fluidauslass geöffnet und zum anderen abgesperrt sein, in einer zweiten Betriebsposition die Fluidverbindung zu beiden Fluidauslässen geöffnet und in einer dritten Betriebsposition die Fluidverbindung zum einen Fluidauslass abgesperrt und zum anderen Fluidauslass geöffnet sein. Oder es kann in einer ersten Betriebsposition des Umstellkörpers die Fluidverbindung vom Fluideinlass zum einen Fluidauslass vollständig geöffnet und zum anderen Fluidauslass vollständig abgesperrt, in einer zweiten Betriebsposition die Fluidverbindung vom Fluideinlass zum einen Fluidauslass vollständig abgesperrt und zum anderen Fluidauslass vollständig geöffnet und in einer dritten Betriebsposition die Fluidverbindung vom Fluideinlass zu beiden Fluidauslässen vollständig oder wenigstens partiell abgesperrt sein.

Derartige Fluidumstellvorrichtungen werden beispielsweise für sanitäre Wasserauslaufarmaturen verwendet, um dem Benutzer zu ermöglichen, zwischen mehreren strömungstechnisch parallelen Wasserauslässen umzuschalten, so dass zugeführtes Wasser steuerbar z.B. nur aus einem oder einer gewünschten Kombination oder keinem der vorhandenen Wasserauslässe austritt. Dies kann z.B. bei Sanitärbrausen zur Einstellung unterschiedlicher Brausestrahlarten genutzt werden.

Entsprechend bezieht sich die Erfindung auch auf eine Sanitärbrause, die ein Brausegehäuse mit einem Brauseeinlass und einem Brausekopf, der mindestens zwei strömungstechnisch parallele Gruppen von Brausestrahlaustrittsöffnungen aufweist, und eine solche Fluidumstellvorrichtung umfasst.

Bei Fluidumstellvorrichtungen eines unidirektionalen Weiterschalttyps wird der Umstellkörper in einer Richtung sequentiell und zyklisch von seiner jeweils momentanen in eine nächste Betriebsposition weitergeschaltet. Der Umstellkörper kann hierzu z.B. um eine Drehachse drehbeweglich sein, wobei seine verschiedenen Betriebspositionen unterschiedlichen Drehwinkelstellungen entsprechen, in die er verdreht werden kann. Dies kann als reine Drehbewegung oder als kombinierte Axial- und Drehbewegung realisiert sein, letzteres oftmals unter Verwendung einer geeigneten Kulissenführung nach Art einer Kugelschreibermechanik. Eine Fluidumstellvorrichtung dieser Art und ihre Verwendung in einer Handbrause zur Einstellung unterschiedlicher Brausestrahlarten ist beispielsweise in der Patentschrift DE 10 2009 008 194 B4 offenbart. Als Bedienelement fungiert dort eine Drucktaste. Es ist für diesen Weiterschalttyp auch bekannt, einen Ratschenmechanismus mit einem Klinkenrad zu verwenden, das typischerweise ein sägezahnförmiges Zahnprofil aufweist, siehe beispielsweise die Offenlegungsschriften EP 3 053 655 A1 und US 2017/0100728 A1. Bei den Umstellvorrichtungen vom Weiterschalttyp sind oftmals relativ viele einzelne Umschaltvorgänge erforderlich, um eine gewünschte Betriebsposition für den Umstellkörper einzustellen, insbesondere in Fällen mit relativ großer Anzahl möglicher Betriebspositionen. So erfordert z.B. das Umschalten bzw. Zurückschalten von einer momentanen auf eine direkt zuvor eingestellte Betriebsposition bei vier zyklisch zu schaltenden Betriebspositionen drei einzelne Umschaltvorgänge und bei fünf Betriebspositionen vier einzelne Umschaltvorgänge.

Alternativ dazu ist der vorliegend betrachtete Umstellertyp bidirektional in Vorwärts- und Rückwärtsrichtung schaltbar. Dies reduziert im Vergleich zum unidirektional schaltbaren Weiterschalttyp die Anzahl erforderlicher einzelner Schaltvorgänge. Eine entsprechende Fluidumstellvorrichtung der eingangs genannten Art und eine damit ausgerüstete Mehrfunktions-Handbrause sind in der Offenlegungsschrift DE 10 2006 020 765 A1 offenbart. Bei der dortigen Fluidumstellvorrichtung beinhaltet die Betätigungseinrichtung eine Betätigungseinheit mit einem scheibenförmigen Drehrad, das eine Durchlassöffnung aufweist und vom Benutzer über einen Umfangsabschnitt verdreht werden kann, mit dem das Drehrad nutzerbedienbar aus einem Gehäuseschlitz der Handbrause ragt. Der Fluideinlass der Umstellvorrichtung besitzt einen halbringförmigen Querschnitt, entlang dem die Durchlassöffnung durch das Verdrehen des Drehrades bewegt werden kann, um den Fluideinlass mit je einem von drei Fluidauslässen der Umstellvorrichtung in Fluidverbindung zu bringen.

Alternativ zum vorliegend betrachteten Typ von Fluidumstellvorrichtungen, bei dem die Betätigungseinrichtung zur sequenziell und bidirektional umschaltenden Betätigung des Umstellkörpers in einer Vorwärts- und einer Rückwärtsumschaltrichtung zwischen mindestens drei verschiedenen Betriebspositionen umschaltbar ist, sind auch Fluidumstellvorrichtungen in Gebrauch, bei denen die Betätigungseinrichtung zwei nutzerbedienbare Bedienelemente aufweist, mit denen durch abwechselnde Betätigung derselben der Umstellkörper jeweils nur zwischen zwei verschiedenen Betriebspositionen hin und her geschaltet wird. Derartige Fluidumstellvorrichtungen sind beispielsweise in den Offenlegungsschriften JP 2002-165719 A, US 2010/0155639 A1 und US 2013/0327431 A1 offenbart. Bei der Umstellvorrichtung der JP 2002-165719 A wird hierbei ein zweiteiliger Umstellkörper durch abwechselndes Betätigen zweier Bedientasten hin und her geschaltet, wobei die beiden Drucktasten über den Umstellkörper bewegungsgekoppelt sind. Zusätzlich ist durch eine andersartige, nicht-sequenzielle Spreizbewegungsbetätigung der beiden Umstellkörper eine dritte Betriebsposition einstellbar. Im Fall der US 2010/0155639 A1 wirken zwei Drucktasten auf eine kippbewegliche Ventilplatte, an der zwei Ventilschließkörper angeordnet sind, wobei es nur zwei unterschiedliche Kipppositionen und damit Betriebspositionen der als Umstellkörper fungierenden Ventilplatte gibt. Im Fall der US 2013/0327431 A1 ist für zwei Fluidauslässe je ein Absperrventilkörper vorgesehen, wobei die beiden Absperrventilkörper axialbeweglich mit Betätigungsstiften von zwei Drucktasten gekoppelt sind, während eine dritte Drucktaste als Rücksetztaste fungiert. Eine verschiebliche Platte fungiert zum Festlegen der drei Drucktasten in definierten axialen Tastenstellungen, wobei die Platte von einer Ruhelage temporär während des Drückens einer der Schalter gegen die Vorspannung einer Rückstellfeder in eine von der Ruhelage beabstandete Position verschoben wird.

Der Erfindung liegt als technisches Problem die Bereitstellung einer Fluidumstellvorrichtung der eingangs genannten Art, die komfortabel bedienbar, mit relativ geringem Aufwand und/oder bei Bedarf kompakter und z.B. leicht in Sanitärbrausen und andere sanitäre Wasserauslaufarmaturen integrierbarer Bauform herstellbar und funktionssicher umschaltbar ist, sowie einer damit ausgerüsteten Sanitärbrause zugrunde.

Die Erfindung löst dieses Problem durch die Bereitstellung einer Fluidumstellvorrichtung mit den Merkmalen des Anspruchs 1 und einer Sanitärbrause mit den Merkmalen des Anspruchs 11.

Bei der erfindungsgemäßen Fluidumstellvorrichtung weist die Betätigungseinrichtung je eine Betätigungseinheit zum Umschalten des Umstellkörpers in Vorwärtsumschaltrichtung bzw. Rückwärtsumschaltrichtung auf. Dabei umfassen die beiden Betätigungseinheiten voneinander unabhängig nutzerbedienbare Bedienelemente. Der Benutzer kann daher durch Auswahl, welches der beiden Bedienelemente er bedient, die Fluidumstellvorrichtung in gewünschter Weise gezielt und komfortabel in Vorwärtsumschaltrichtung oder Rückwärtsumschaltrichtung umschalten. Zudem kann durch die bidirektionale Umstellfähigkeit beispielsweise mittels nur eines Umschaltvorgangs von einer momentanen in eine direkt davor eingestellte Betriebsposition des Umstellkörpers zurückgeschaltet werden, unabhängig davon, wieviel verschiedene Betriebspositionen für den Umstellkörper vorgesehen sind. Die so konfigurierte Fluidumstellvorrichtung mit dieser Betätigungseinrichtung lässt sich kompakt bauen und z.B. ohne Weiteres in sanitäre Wasserauslaufarmaturen, wie Sanitärbrausen, integrieren.

In Weiterbildung der Erfindung sind die beiden Bedienelemente auf Bediendruck ansprechende Bedienelemente, z.B. in Form von Drucktastenelementen, Schiebeschaltern oder Touch-Pad-Elementen. Solche drucksensitiven Bedienelemente können z.B. direkt benachbart oder mit geringem Abstand nebeneinander angeordnet sein, so dass sie vom Benutzer bequem selektiv z.B. mit einem Finger bedient werden können.

In Weiterbildung der Erfindung beinhalten die beiden Betätigungseinheiten je ein lineares Kraftübertragungselement, z.B. ein schubkraft- und/oder zugkraftübertragendes Stabelement, Drahtelement oder dergleichen. Die beiden Kraftübertragungselemente sind einerseits mit je einem der Bedienelemente und andererseits mit dem Umstellkörper direkt oder indirekt, d.h. unter Zwischenfügung eines oder mehrerer Kopplungselemente, gekoppelt und haben gegensätzliche Wirkrichtungen auf den Umstellkörper, d.h. das eine Kraftübertragungselement dient zur Betätigung des Umstellkörpers in Vorwärtsumschaltrichtung und das andere Kraftübertragungselement zur Betätigung des Umstellkörpers in Rückwärtsumschaltrichtung.

In weiterer Ausgestaltung der Erfindung ist der Umstellkörper um eine Drehachse drehbeweglich, und die Wirkrichtungen der beiden Kraftübertragungselemente auf den Umstellkörper sind gegensinnige Drehrichtungen. In diesem Fall entsprechen die verschiedenen Betriebspositionen des Umstellkörpers unterschiedlichen Drehwinkelstellungen desselben, zwischen denen er verdreht werden kann. Eine solche Ausführung begünstigt einen kompakten Aufbau der Fluidumstellvorrichtung. Optional kann der Umstellkörper zusätzlich axialbeweglich parallel zur Drehachse sein. In diesem Fall beinhaltet die Betätigung des Umstellkörpers eine kombinierte Axial- und Drehbewegung desselben. Dies kann für Anwendungen von Vorteil sein, bei denen der Umstellkörper in Betriebsposition gegen einen feststehenden Ventilsitz der Fluidumstellvorrichtung anliegt. Denn in diesem Fall kann der Umstellkörper dann zunächst axial vom Ventilsitz abgehoben werden, bevor er in seine nächste Betriebsposition verdreht wird. Dies kann sich verschleißmindernd auswirken und das für die Verdrehung des Umstellkörpers aufzuwendende Drehmoment gering halten.

In weiterer Ausgestaltung der Erfindung weist der Umstellkörper eine Zahnkranzanordnung auf, mit der die beiden Kraftübertragungselemente zusammenwirken, und zwar auf gegenüberliegenden Seiten bezüglich einer die Drehachse enthaltenden Längsmittenebene des Umstellkörpers, was für die beabsichtigten gegensätzlichen Wirkrichtungen der Kraftübertragungselemente auf den Umstellkörper von Vorteil ist. Jedes der beiden Kraftübertragungselemente ist mit der Zahnkranzanordnung jeweils während einer Vorbewegung in Eingriff und verdreht dadurch den Umstellkörper. Hingegen sind die Kraftübertragungselemente während einer der Vorbewegung entgegengesetzten Rückbewegung nicht mit der Zahnkranzanordnung in Eingriff, so dass sich die Kraftübertragungselemente in eine rückwärtige Ausgangsstellung zurückbewegen können, ohne dadurch den Umstellkörper erneut zu verdrehen bzw. zurückzudrehen. Dies stellt eine vorteilhafte mechanische Kopplungslösung für die gewünschte Umschaltbetätigung des Umstellkörpers dar, wobei in diesem Fall eine Translationsbewegung, d.h. eine lineare Bewegung, der Kraftübertragungselemente in eine Drehbewegung des Umstellkörpers umgesetzt wird.

In weiterer Ausgestaltung der Erfindung weist die Zahnkranzanordnung einen gemeinsamen Zahnkranz oder je einen eigenen Zahnkranz für die beiden Kraftübertragungselemente auf. In letzterem Fall sind die beiden Zahnkränze axial, d.h. parallel zur Drehachse des Umstellkörpers, versetzt am Umstellkörper angeordnet. Jede der beiden genannten alternativen Ausführungen der Zahnkranzanordnung kann je nach Bedarf und Systemumgebung vorteilhaft für einen funktionsgünstigen und kompakten Aufbau der Fluidumstellvorrichtung und für einen Einbau der Fluidumstellvorrichtung z.B. in eine sanitäre Wasserauslaufarmatur gewählt werden.

In weiterer Ausgestaltung der Erfindung weisen die beiden Zahnkränze der Zahnkranzanordnung gegensätzliche sägezahnartige Zahnprofile auf. Damit lässt sich in konstruktiv einfacher Weise die Funktionalität der Kraftübertragungselemente unterstützen, wonach diese den Umstellkörper nur in ihrer Vorbewegung verdrehen, hingegen nicht in ihrer Rückbewegung.

In Ausgestaltung der Erfindung beinhaltet die Betätigungseinrichtung mindestens ein elastisches Rückstellelement, das eine elastische Rückstellkraft auf das erste und/oder auf das zweite Kraftübertragungselement in eine Ausgangsposition ausübt. In vorteilhaften Ausführungen ist die Ausgangsposition die rückwärtige Position des jeweiligen Kraftübertragungselements, aus der heraus es zur umschaltenden Betätigung des Umstellkörpers vom Benutzer durch Bedienen des zugehörigen Bedienelements vorbewegt werden kann. Das elastische Rückstellelement ist in diesem Fall in der Lage, das vorbewegte Kraftübertragungselement selbsttätig wieder in seine rückwärtige Ausgangsposition zurückzubewegen, ohne dass dies eine Aktion des Benutzers erfordert.

In Weiterbildung der Erfindung beinhaltet die Betätigungseinrichtung eine Kulissenführung mit zusammenwirkenden Kulissenführungselementen am Umstellkörper einerseits und an einem gegenüber dem Umstellkörper stationären Teil der Fluidumstellvorrichtung andererseits, wobei die Kulissenführungselemente relativ zueinander zwischen stabilen Positionen beweglich sind, welche die Betriebspositionen des Umstellkörpers definieren. Dadurch kann die Kulissenführung die Betätigungseinheiten darin unterstützen, den Umstellkörper in die jeweils nächste gewünschte Betriebsposition zu bewegen und diesen sicher darin zu halten. Beispielsweise können die Kulissenführung und die Betätigungseinheiten dergestalt aufeinander abgestimmt sein, dass die jeweilige Betätigungseinheit den Umstellkörper aus seiner bisherigen Betriebsposition nur bis in eine instabile Zwischenposition der Kulissenführung herausbewegt, wonach sich die Kulissenführung von dort in ihre nächste stabile Position bewegt und dabei den Umstellkörper in dessen zugehörige nächste Betriebsposition mitnimmt. Dies ermöglicht dem Benutzer kurze Schaltwege, da die Betätigungseinheit nur bis zur instabilen Zwischenposition der Kulissenführung betätigt werden muss.

In Weiterbildung der Erfindung ist die Betätigungseinrichtung zur Erzeugung eines betätigungsmeldenden Schaltgeräusches bei Betätigung des jeweiligen Bedienelementes und entsprechender Änderung der Betriebsposition des Umstellkörpers eingerichtet. So ist für den Benutzer leicht wahrnehmbar, dass auf einen anderen Fluidauslass umgestellt wurde. Bei dem Schaltgeräusch kann es sich z.B. um ein Klickgeräusch oder ein anderes für den Schaltvorgang charakteristisches Geräusch handeln.

Die erfindungsgemäße Sanitärbrause umfasst ein Brausegehäuse mit einem Brauseeinlass und einem Brausekopf, der mindestens zwei strömungstechnisch parallele Gruppen von Brausestrahlaustrittsöffnungen aufweist, und die erfindungsgemäße Fluidumstellvorrichtung, die in diesem Fall zur Steuerung der Fluidzuführung vom Brauseeinlass zu den strömungstechnisch parallelen Gruppen von Brausestrahlaustrittsöffnungen dient. Damit kann der Benutzer in komfortabler Weise z.B. unterschiedliche Brausestrahlarten entsprechend den verschiedenen Gruppen von Brausestrahlaustrittsöffnungen anwählen bzw. zwischen diesen umschalten.

In Weiterbildung der Erfindung ist der Umstellkörper im Brausekopf der Sanitärbrause angeordnet, und die voneinander unabhängig nutzerbedienbaren Bedienelemente der Fluidumstellvorrichtung sind benachbart am Brausegehäuse angeordnet, z.B. direkt oder mit etwas Abstand nebeneinander derart, dass sie vom Benutzer leicht mit einem Finger bedient werden können. Dies ist besonders vorteilhaft für Handbrausen, deren Gehäuse der Benutzer mit einer Hand umgreifen kann. Er kann dann die Bedienelemente mit einem Finger dieser Hand sehr bequem bedienen. Dies stellt eine sehr benutzerfreundliche, kompakte und funktionsgünstige Integration der erfindungsgemäßen Fluidumstellvorrichtung in eine Sanitärbrause dar, z.B. eine Handbrause für eine Duscheinrichtung.

Vorteilhafte Ausführungsformen der Erfindung sind in den Zeichnungen dargestellt und werden nachfolgend beschrieben. Hierbei zeigen:
- Fig. 1: eine Draufsicht von oben auf eine sanitäre Handbrause mit Fluidumstellvorrichtung,
- Fig. 2: eine Draufsicht von unten auf einen Brausekopfbereich der Brause von Fig. 1,
- Fig. 3: eine Draufsicht von oben auf den Brausekopfbereich bei abgenommener Abdeckung,
- Fig. 4: eine Längsschnittansicht längs einer Linie IV-IV von Fig. 1,
- Fig. 5: eine Längsschnittansicht längs einer Linie V-V von Fig. 3,
- Fig. 6: eine Seitenansicht eines Umstellkörpers und einer Betätigungseinrichtung einer für die Sanitärbrause der Fig. 1 bis 5 verwendbaren Fluidumstellvorrichtung,
- Fig. 7: eine Explosionslängsschnittansicht des Umstellkörpers und eines Verteilerelements der Fluidumstellvorrichtung von Fig. 6,
- Fig. 8: eine Detailansicht eines Bereichs VIII von Fig. 3 mit einer Draufsicht auf den Umstellkörper und einen angrenzenden Teil der Betätigungseinrichtung,
- Fig. 9: eine Detailansicht eines Bereichs IX von Fig. 4 mit einer Längsschnittansicht aus dem Bereich einer Kulissenführung der Betätigungseinrichtung,
- Fig. 10: die Ansicht von Fig. 8 in einer Umschaltzwischenstellung der Fluidumstellvorrichtung,
- Fig. 11: die Ansicht der Fig. 9 in der Umschaltzwischenstellung von Fig. 10,
- Fig. 12: eine Ansicht entsprechend Fig. 6 für eine Variante der Fluidumstellvorrichtung mit modifizierter Kopplung von Betätigungseinrichtung und Umstellkörper,
- Fig. 13: eine Ansicht entsprechend Fig. 8 für die Fluidumstellvorrichtung von Fig. 12 und
- Fig. 14: eine Ansicht entsprechend Fig. 10 für die Fluidumstellvorrichtung von Fig. 12.

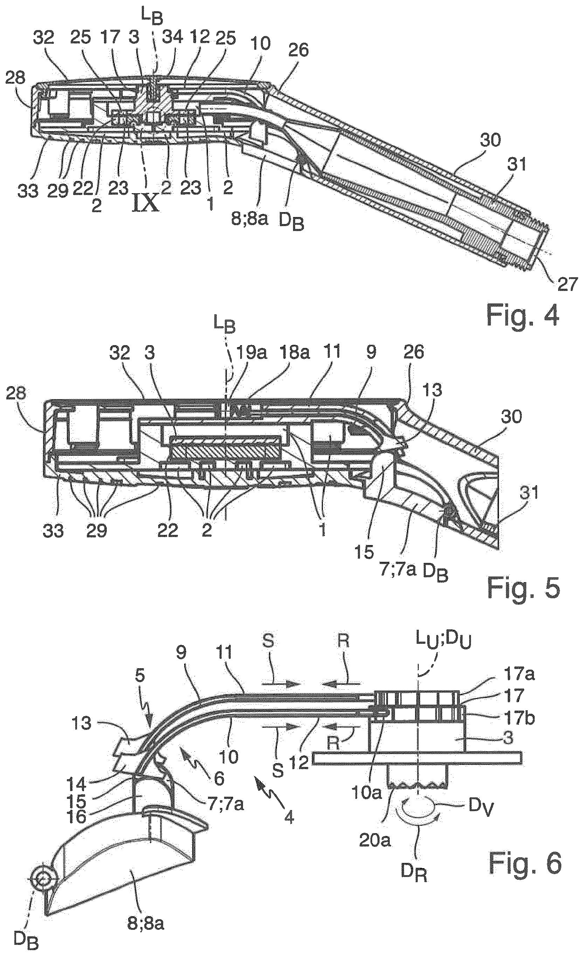

Die in den Fig. 6 bis 11 veranschaulichte Fluidumstellvorrichtung beinhaltet mindestens einen Fluideinlass 1, mindestens zwei Fluidauslässe 2, einen beweglichen Umstellkörper 3 und eine Betätigungseinrichtung 4. Der Umstellkörper 3 ist zur Steuerung von Fluidverbindungen der mindestens zwei Fluidauslässe 2 mit dem mindestens einen Fluideinlass 1 zwischen mindestens drei verschiedenen Betriebspositionen umschaltbar. Die Betätigungseinrichtung 4 ist zur sequentiell und bidirektional umschaltenden Betätigung des Umstellkörpers 3 sowohl in einer Vorwärtsumschaltrichtung als auch in einer zur Vorwärtsumschaltrichtung inversen Rückwärtsumschaltrichtung ausgelegt.

Die Betätigungseinrichtung 4 beinhaltet eine erste Betätigungseinheit 5 zur sequentiell umschaltenden Betätigung des Umstellkörpers 3 in der Vorwärtsumschaltrichtung und eine zweite Betätigungseinheit 6 zur sequentiell umschaltenden Betätigung des Umstellkörpers 3 in der Rückwärtsumschaltrichtung. Die erste Betätigungseinheit 5 weist ein erstes Bedienelement 7 auf, und die zweite Betätigungseinheit 6 weist ein zweites Bedienelement 8 auf, wobei die beiden Bedienelemente 7, 8 voneinander unabhängig nutzerbedienbar sind.

Im gezeigten Ausführungsbeispiel der Fig. 6 bis 11 sind die beiden Bedienelemente 7, 8 als auf Bediendruck ansprechende Bedienelemente 7a, 8a realisiert, z.B. als entsprechende Drucktasten. Die drucksensitiven Bedienelemente 7a, 8a können beispielsweise, wie gezeigt, um eine jeweilige Drehachse D_{B} schwenkbeweglich sein, wobei ihre beiden Drehachsen D_{B} je nach Bedarf und Systemausführung zusammenfallen oder voneinander verschieden sein können.

Weiter umfasst die erste Betätigungseinheit 5 ein erstes lineares Kraftübertragungselement 9, und die zweite Betätigungseinheit 6 umfasst ein zweites lineares Kraftübertragungselement 10. Die beiden Kraftübertragungselemente 9, 10 sind einerseits mit je einem der beiden Bedienelemente 7, 8 und andererseits mit dem Umstellkörper 3 gekoppelt und haben gegensätzliche Wirkrichtungen auf den Umstellkörper 3. Im gezeigten Beispiel sind die beiden linearen Kraftübertragungselemente 9, 10 durch je ein langgestrecktes, mindestens auf Schub belastbares Element gebildet, wie ein entsprechendes Stab-, Stangen-, Draht- bzw. Rohrelement, wobei das jeweilige langgestreckte Element in einer zugehörigen Hülsenführung 11, 12 transversal vor und zurück beweglich geführt ist. An seinem bedienelementseitigen Ende ist das jeweilige langgestreckte Element mit einem Pedalteil 13, 14 versehen, durch das es mit einem Schubnocken 15, 16 zusammenwirkt, der am jeweiligen drucksensitiven Bedienelement 7a, 8a gebildet ist. Alternativ kann eine andere herkömmliche Schubkraftkopplung zwischen dem jeweiligen drucksensitiven Bedienelement 7a, 8a und dem zugeordneten linearen Kraftübertragungselement 9, 10 vorgesehen sein.

Im gezeigten Ausführungsbeispiel der Fig. 6 bis 11 ist der Umstellkörper 3 um eine Drehachse D_{U} drehbeweglich, wobei die Drehachse D_{U} mit einer Längsachse L_{U} des Umstellkörpers 3 zusammenfallen kann. Die Wirkrichtungen der beiden linearen Kraftübertragungselemente 9, 10 sind folglich gegensinnige Drehrichtungen, und zwar eine Vorwärts-Drehrichtung D_{V} beispielsweise im Uhrzeigersinn und eine Rückwärts-Drehrichtung D_{R}=-D_{V} im Gegenuhrzeigersinn. Eine Druckbetätigung des ersten Bedienelements 7a bewirkt ein transversales Vorschieben des ersten Kraftübertragungselements 9 in Schubrichtung S, wodurch der Umstellkörper 3 in Vorwärts-Drehrichtung D_{V} gedreht wird. Eine Druckbetätigung des zweiten Bedienelements 8a bewirkt ein transversales Vorschieben des zweiten Kraftübertragungselements 10 in Schubrichtung S, wodurch der Umstellkörper 3 in Rückwärts-Drehrichtung D_{R} gedreht wird.

Um die Linearbewegung der Kraftübertragungselemente 9, 10 in die Drehbewegung des Umstellkörpers 3 umzusetzen, weist der Umstellkörper 3 eine Zahnkranzanordnung 17 auf, mit der die beiden Kraftübertragungselemente 9, 10 zusammenwirken, und zwar auf bezüglich einer Längsmittenebene E_{U} des Umstellkörpers 3 gegenüberliegenden Seiten, wobei die Längsmittenebene E_{U} des Umstellkörpers 3 dessen Drehachse D_{U} enthält und parallel zur Schubrichtung S der linearen Kraftübertragungselemente 9, 10 ist. Jedes der beiden linearen Kraftübertragungselemente 9, 10 ist mit der Zahnkranzanordnung 17 jeweils während der Vorbewegung in Schubrichtung S in Eingriff und verdreht den Umstellkörper 3 entsprechend in Vorwärts- bzw. Rückwärts-Drehrichtung D_{V}, D_{R}. Hingegen sind die Kraftübertragungselemente 9, 10 während einer der Vorbewegung entgegengesetzten Rückbewegung, d.h. in einer Rückwärtsrichtung R=-S entgegen der Schubrichtung S außer Eingriff mit der Zahnkranzanordnung 17.

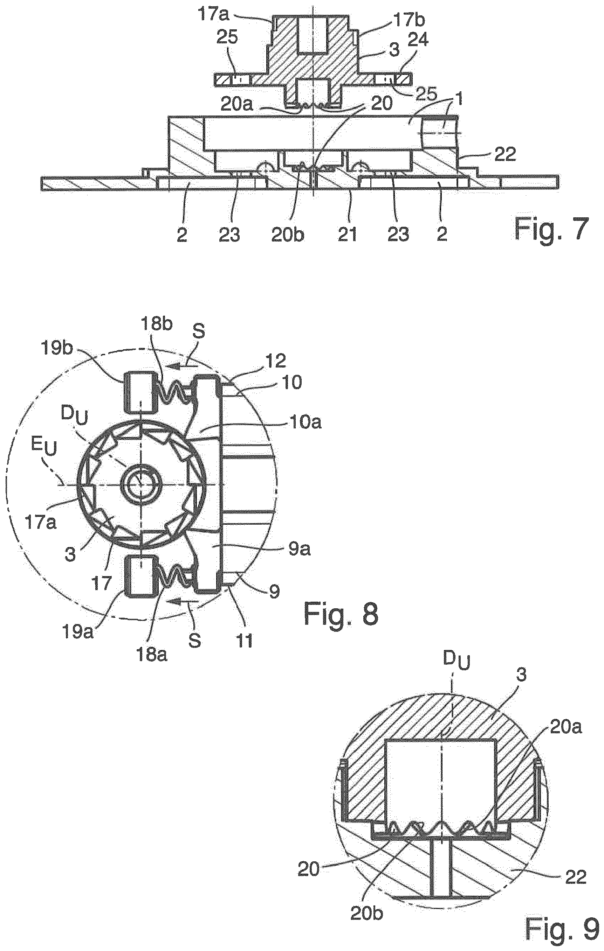

Im gezeigten Ausführungsbeispiel der Fig. 6 bis 11 weist die Zahnkranzanordnung 17 einen ersten Zahnkranz 17a für das erste Kraftübertragungselement 9 und einen gegenüber dem ersten Zahnkranz 17a axial versetzt angeordneten zweiten Zahnkranz 17b für das zweite Kraftübertragungselement 10 auf. Im gezeigten Beispiel befinden sich die beiden Zahnkränze 17a, 17b in einem in Fig. 7 oberen Bereich eines zylindrischen Grundkörperteils des Umstellkörpers 3. Es kann funktionell von Vorteil sein, wenn der erste und der zweite Zahnkranz 17a, 17b jeweils wie gezeigt ein sägezahnartiges Zahnprofil besitzen, und zwar speziell gegensätzliche sägezahnartige Zahnprofile. Die Kraftübertragungselemente 9, 10 kommen mit einem Kopfteil 9a, 10a jeweils während ihrer Vorschubbewegung in Richtung S mit dem zugehörigen sägezahnartigen Zahnprofil des ersten bzw. zweiten Zahnkranzes 17a, 17b in Eingriff und verdrehen den Umstellkörper 3 entsprechend, wobei der Kopfteil 9a, 10a eine hierfür geeignete, z.B. zahnartige, Form aufweist.

Vorteilhaft kann die Betätigungsvorrichtung 4, wie im Ausführungsbeispiel der Fig. 6 bis 11, mindestens ein elastisches Rückstellelement beinhalten, um eine elastische Rückstellkraft auf die Kraftübertragungselemente 9, 10 in eine Ausgangsposition auszuüben. Im gezeigten Beispiel sind hierfür ein erstes elastisches Rückstellelement 18a und ein zweites elastisches Rückstellelement 18b vorgesehen, z.B. jeweils in Form einer Schraubenfeder, wobei das erste elastische Rückstellelement 18a die elastische Rückstellkraft in Rückwärtsrichtung R entgegen der Schubrichtung S auf das erste Kraftübertragungselement 9 ausübt und in gleicher Weise das zweite elastische Rückstellelement 18b die elastische Rückstellkraft auf das zweite Kraftübertragungselement 10 in Rückwärtsrichtung R ausübt. Dabei stellt in diesem Fall die in den Fig. 6 und 8 gezeigte Ruheposition, in der keine Aktivierung der Betätigungseinrichtung 4 durch den Benutzer vorliegt, die Ausgangsposition der Kraftübertragungselemente 9, 10 dar, in der sich diese in ihrer zurückbewegten, nicht vorgeschobenen Stellung befinden. Die Rückstellelemente 18a, 18b stützen sich jeweils einerseits an einem gegenüber dem Umstellkörper 3 und den Kraftübertragungselementen 9, 10 stationär bleibenden Abstützbauteil 19a, 19b und andererseits an einer Abstützfläche der Kopfteile 9a, 10a der Kraftübertragungselemente 9, 10 ab.

Die Betätigungseinrichtung 4 umfasst zudem eine Kulissenführung 20 mit zusammenwirkenden Kulissenführungselementen 20a, 20b am Umstellkörper 3 einerseits und an einem gegenüber dem Umstellkörper 3 stationären Teil 21 der Fluidumstellvorrichtung andererseits. Dabei sind die Kulissenführungselemente 20a, 20b relativ zueinander zwischen stabilen Positionen beweglich, welche die Betriebspositionen des Umstellkörpers 3 definieren.

Im gezeigten Ausführungsbeispiel der Fig. 6 bis 11 sind die beiden zusammenwirkenden Kulissenführungselemente 20a, 20b von jeweils einem Stirnzahnkranz gebildet, von denen der eine an einer in Fig. 7 unteren Stirnseite des zylindrischen Grundkörperteils des Umstellkörpers 3 und der andere an einer in Fig. 7 oberen Seite eines Verteilerkörpers 22 ausgebildet sind, der in diesem Beispiel das entsprechende, gegenüber dem Umstellkörper 3 stationäre Teil 21 der Fluidumstellvorrichtung bildet. Der Verteilerkörper 22 weist an seiner in Fig. 7 oberen Seite den mindestens einen Fluideinlass 1 und an seiner in Fig. 7 unteren Seite die mindestens zwei Fluidauslässe 2 der Fluidumstellvorrichtung auf. Vom mindestens einen Fluideinlass 1 führt im Verteilerkörper 22 jeweils mindestens eine Durchlassöffnung 23 zum jeweiligen Fluidauslass 2. In dieser beispielhaften Konfiguration ist der Umstellkörper 3 in Fig. 7 von oben in eine korrespondierende Aufnahme des Verteilerkörpers 22 einfügbar und weist in einem vom zylindrischen Grundkörperteil radial abstehenden Steuerungsringbereich 24 Steuerungsöffnungen 25 auf, die je nach Drehlage des Umstellkörpers 3 ganz oder teilweise mit einer oder mehreren der Durchlassöffnungen 23 überlappen oder letztere vollständig gegenüber dem mindestens einen Fluideinlass 1 absperren. Dementsprechend steuert der Umstellkörper 3 je nach seiner Drehposition die Fluidverbindungen der Fluidauslässe 2 mit dem oder den Fluideinlässen 1.

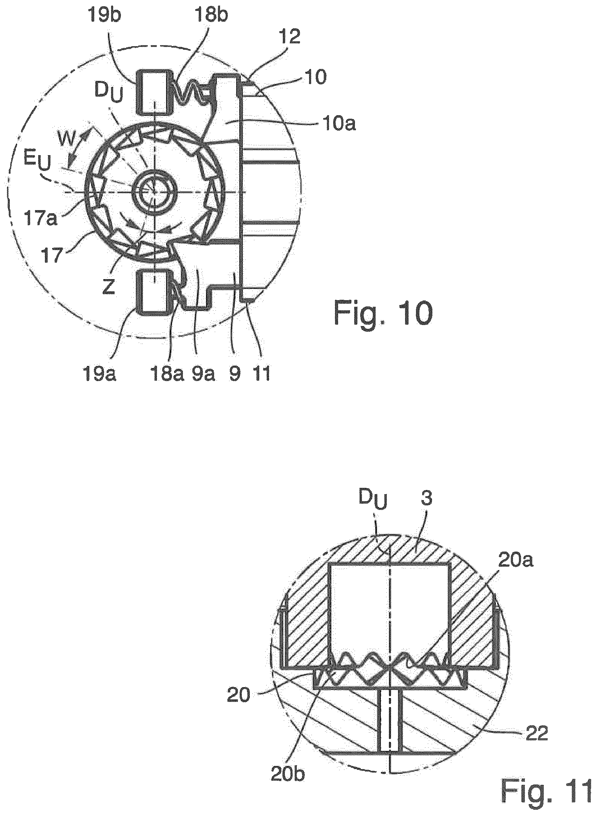

Die Kulissenführung 20 ist mit ihren Kulissenführungselementen 20a, 20b derart konfiguriert, dass die sich gegenüberstehenden Stirnzahnkränze bei entsprechender Drehstellung des Umstellkörpers 3 relativ zum Verteilerkörper 22 ineinandergreifen können, wie in Fig. 9 gezeigt, wodurch jeweils eine stabile Position der Kulissenführungselemente 20a, 20b gebildet ist, die entsprechend eine stabile Position, d.h. Betriebsposition, des Umstellkörpers 3 definiert. Aus dieser jeweiligen stabilen Position können die Kulissenführungselemente 20a, 20b durch Relativverdrehung des Umstellkörpers 3 gegenüber dem Verteilerkörper 22 herausbewegt werden, wobei die Zahnflanken der Stirnzahnkränze aneinander entlanggleiten, bis sich die Stirnzahnkränze mit ihren Zahnspitzen gegenüberliegen, wie in Fig. 11 gezeigt, wobei der Umstellkörper 3 zusätzlich zu seiner Drehbewegung eine entsprechende axiale Abhebebewegung gegenüber dem Verteilerkörper 22 um die Höhe bzw. Tiefe der Stirnzahnkränze ausführt. Dieses axiale Abheben geschieht gegen die Wirkung eines nicht gezeigten axialen Vorspannelements, das den Umstellkörper axial in Richtung auf den Verteilerkörper vorspannt. Sobald durch geringfügiges Weiterdrehen des Umstellkörpers 3 die Kulissenführungselemente 20a, 20b diese labile Position gemäß Fig. 11 überschritten haben, gleiten die Zähne der Stirnzahnkränze in die jeweils nächste Vertiefung des gegenüberliegenden Stirnzahnkranzes hinein, wodurch der Umstellkörper 3 entsprechend weiter in seine nächste Betriebsposition verdreht wird, die zu dieser nächsten stabilen Position der Kulissenführungselemente 20a, 20b gehört, wobei sich der Umstellkörper 3 zusätzlich wieder entsprechend axial bewegt.

Dadurch ergibt sich mit der geschilderten Betätigungseinrichtung 4 folgender vorteilhafter Verlauf eines jeweiligen Umschaltvorgangs der Fluidumstellvorrichtung. Der Benutzer betätigt entweder die erste Betätigungseinheit 5 oder die zweite Betätigungseinheit 6 durch entsprechendes Drücken des Bedienelements 7a, 8a abhängig davon, in welche Richtung er den Umstellkörper 3 umschalten möchte.

Wenn er das erste Bedienelement 7a bedient, drückt dieses das Kraftübertragungselement 9 in Schubrichtung S vor, wodurch dessen Kopfteil 9a nach vorn in Eingriff mit dem zugeordneten Zahnkranz 17a gelangt, was eine Verdrehung des Umstellkörpers 3 in der Vorwärts-Drehrichtung D_{V} bewirkt. Die Vorschubbewegung des ersten Bedienelements 9 erfolgt so weit, bis die Kulissenführung 20 mit ihren beiden zusammenwirkenden Kulissenführungselementen 20a, 20b ihre in Fig. 11 gezeigte labile Position erreicht und geringfügig überschritten hat. Die zugehörige, vorgeschobene Stellung des ersten Kraftübertragungselements 9 und die zugehörige verdrehte Zwischenstellung des Umstellkörpers 3 sind in Fig. 10 gezeigt. Gegenüber der Ausgangsposition von Fig. 8 ist der Umstellkörper 3 um einen Zwischendrehwinkel z verdreht, der in etwa dem halben Zahnwinkelabstand der Stirnzahnkränze der Kulissenführung 20 entspricht. Das Vorschieben des ersten Kraftübertragungselements 9 geschieht gegen die Rückstellkraft des ersten elastischen Rückstellelements 18a.

Sobald der Benutzer daraufhin das Bedienelement 7a loslässt, drückt das elastische Rückstellelement 18a das Kraftübertragungselement 9 wieder in seine rückwärtige Ausgangsposition zurück, wobei sein Kopfteil 9a wieder aus dem Eingriff mit dem zugeordneten Zahnkranz 17a herausgelangt. Dies kann durch das sägezahnartige Zahnprofil und/oder durch eine geeignete Gestaltung des damit in Eingriff kommenden Abschnitts des Kopfteils 9a unterstützt werden. Des Weiteren wird der Umstellkörper 3 unter der Wirkung des nicht gezeigten axialen Vorspannelements und der Kulissenführung 20 weitergedreht, bis die Stirnzahnkränze ihre in Drehrichtung nächste ineinanderliegende Position, d.h. die nächste stabile Position der zusammenwirkenden Kulissenführungselemente 20a, 20b, eingenommen haben. Der Umstellkörper 3 hat sich dann insgesamt um etwa den doppelten Zwischendrehwinkel z von der vorigen in seine nächste Betriebsposition weitergedreht. Dieser gesamte Verdrehwinkel zwischen je zwei benachbarten Betriebspositionen des Umstellkörpers 3 kann gleichzeitig in etwa einem Zahnwinkelabstand w des ersten Zahnkranzes 17a entsprechen.

In gleichartiger Weise wird, wenn der Benutzer das zweite Bedienelement 8a bedient, das zweite Kraftübertragungselement 10 in Schubrichtung S vorgeschoben, wodurch dieses mit dem zugeordneten zweiten Zahnkranz 17b in Eingriff gelangt und den Umstellkörper 3 in der Rückwärts-Drehrichtung D_{R} wiederum bis in eine Zwischenstellung analog zu den Fig. 10 und 11 verdreht. Das durch die Vorschubbewegung des zweiten Kraftübertragungselements 10 gespannte zweite elastische Rückstellelement 18b drückt dann das zweite Kraftübertragungselement 10, nachdem der Benutzer das Bedienelement 8a losgelassen hat, wieder zurück, so dass es aus dem Eingriff mit dem zugehörigen Zahnkranz 17b herausgelangt. Der Umstellkörper 3 dreht sich durch die Wirkung seines axialen Vorspannelements und der Kulissenführung 20 in die in Rückwärts-Drehrichtung D_{R} nächste Betriebsposition, nachdem die Kulissenführung 20 zuvor durch die Vorschubbewegung des zweiten linearen Kraftübertragungselements 10 ihre labile Zwischenposition analog zu Fig. 11 erreicht und geringfügig überschritten hat.

Folglich ermöglicht die geschilderte Fluidumstellvorrichtung eine sequentielle und bidirektionale Umschaltung des Umstellkörpers 3 sowohl in einer Vorwärts- als auch einer dazu inversen Rückwärtsumschaltrichtung, wobei dies im gezeigten Beispiel Drehrichtungen sind, in alternativen Ausführungsformen jedoch auch z.B. transversale, i.e. translatorische, Umschaltbewegungen sein können. In jedem Fall hat diese Umschaltfunktionalität den Vorteil, dass auch dann, wenn der Umstellkörper relativ viele unterschiedliche Betriebspositionen besitzt, zwischen denen er umgeschaltet werden kann, nur relativ wenige Umschaltvorgänge nötig sind, um ihn jeweils zwischen zwei beliebigen Betriebspositionen umzuschalten. So lässt sich beispielsweise im Fall von sechs möglichen Betriebspositionen jede neue Betriebsposition von jeder momentanen Betriebsposition mit höchstens drei einzelnen Umschaltvorgängen erreichen, wohingegen z.B. im Fall einer herkömmlichen unidirektionalen Weiterschaltkonfiguration bis zu fünf einzelne Umschaltvorgänge erforderlich werden können. Bei Bedarf kann durch entsprechende herkömmliche Mittel ein für den Schaltvorgang charakteristisches Geräusch, wie ein Klickgeräusch, erzeugt werden, das dem Benutzer akustisch anzeigt, dass der Umstellvorgang erfolgreich ausgeführt wurde.

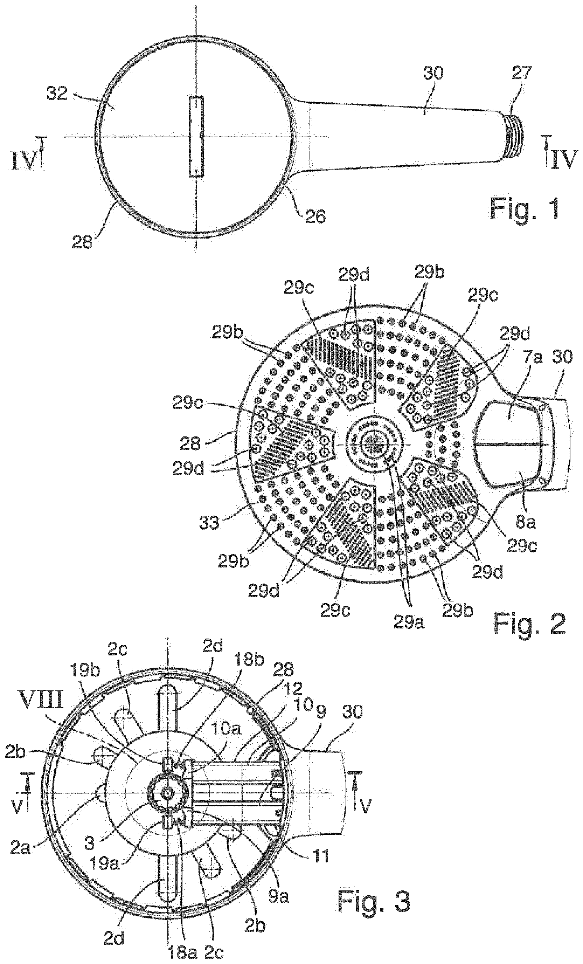

Die in den Fig. 6 bis 11 veranschaulichte Fluidumstellvorrichtung eignet sich beispielsweise zum Einbau in eine sanitäre Wasserauslaufarmatur, wie eine Sanitärbrause. Dazu zeigen exemplarisch die Fig. 1 bis 5 eine Sanitärbrause in Form einer Handbrause mit einer eingebauten Fluidumstellvorrichtung nach Art der Fig. 6 bis 11. Im gezeigten Bespiel umfasst die Handbrause ein Brausegehäuse 26 mit einem Brauseeinlass 27 und einem Brausekopf 28, der mindestens zwei strömungstechnisch parallele Gruppen von Brausestrahlaustrittsöffnungen 29 aufweist.

Das Brausegehäuse 26 beinhaltet eintrittsseitig ein Griffteil 30, das vom Benutzer zur Bedienung der Handbrause gegriffen werden kann und in das ein Einlassrohrkörper 31 eingefügt ist, der eintrittsseitig den Brauseeinlass 27 bildet und austrittsseitig in den Fluideinlass 1 der Fluidumstellvorrichtung im Brausekopf 28 mündet. Das Griffteil 30 grenzt seitlich an den zylindrischen Brausekopf 28 an, der oberseitig eine Abdeckung 32 aufweist und unterseitig mit einer brausestrahlaustrittsseitigen Strahlscheibe 33 abschließt. Im Übergangsbereich von Griffteil 30 und Brausekopf 28 sind unterseitig die Drucktasten-Bedienelemente 7a, 8a um ihre Schwenkachse D_{B} schwenkbeweglich am Brausegehäuse 26 angelenkt, so dass sie vom Benutzer leicht z.B. mittels des Daumens seiner das Griffteil 30 umgreifenden Hand bedient werden können. Dabei sind die beiden Bedienelemente 7a, 8a, wie aus Fig. 2 ersichtlich, vorzugsweise direkt nebeneinanderliegend angeordnet.

Wie ebenfalls insbesondere aus Fig. 2 zu erkennen, beinhalten die mindestens zwei strömungstechnisch parallelen Gruppen von Brausestrahlaustrittsöffnungen 29 in diesem Beispiel vier strömungstechnisch parallele Gruppen von Brausestrahlaustrittsöffnungen, die verteilt an der unterseitigen Strahlscheibe 33 des Brausekopfs 28 angeordnet sind, und zwar eine erste Gruppe mittiger Brausestrahlaustrittsöffnungen 29a, eine zweite Gruppe peripherer Brausestrahlaustrittsöffnungen 29b, die in mehreren, in Umfangsrichtung beabstandeten Untergruppen angeordnet sind, eine dritte Gruppe peripherer Brausestrahlaustrittsöffnungen 29c, die in Schrägstreifen in den Zwischenräumen zwischen den Untergruppen der zweiten Gruppe von Brausestrahlaustrittsöffnungen 29b angeordnet sind, und eine vierte Gruppe von Brausestrahlaustrittsöffnungen 29d, die radial innerhalb und außerhalb der Schrägstreifen der dritten Gruppe von Brausestrahlaustrittsöffnungen 29c angeordnet sind. Jede dieser vier strömungstechnisch parallelen Gruppen von Brausestrahlaustrittsöffnungen 29a bis 29d stellt eine entsprechende eigene Brausestrahlart für die Handbrause zur Verfügung. Dabei sind je nach Bedarf und Anwendungsfall auch Mischformen möglich, bei denen nicht nur eine, sondern mehrere der vier Gruppen von Brausestrahlaustrittsöffnungen 29a bis 29d gleichzeitig brauseaktiv sind, d.h. mit ihrem jeweiligen Brausestrahl zum Gesamtbrausestrahl der Handbrause beitragen.

Abgestimmt auf die vier strömungstechnisch parallelen Gruppen von Brausestrahlaustrittsöffnungen 29a bis 29d sind die mindestens zwei Fluidauslässe 2 der in die Handbrause integrierten Fluidumstellvorrichtung von einer Auslasskonfiguration mit vier strömungstechnisch parallelen Fluidauslasskanälen 2a, 2b, 2c, 2d gebildet, wie sie insbesondere aus Fig. 3 ersichtlich sind. Diese Fluidauslasskonfiguration wird durch geeignete Gestaltung des Verteilerkörpers 22 bereitgestellt, ggf. im Zusammenspiel mit einer oder weiteren, im Brausekopf 28 verbauten Komponenten. Die Fluidauslasskanäle 2a bis 2d enden eintrittsseitig in je einer oder mehreren zugehörigen der im Verteilerkörper 22 vorgesehenen Durchtrittsöffnungen 23, die individuell vom Umstellkörper 3 abhängig von dessen Betriebsposition vollständig abgesperrt oder über dessen Steuerungsöffnungen 25 ganz oder teilweise freigelassen werden, so dass entsprechend die Fluidverbindung vom Fluideinlass 1 und damit vom Brauseeinlass 27 zur jeweiligen Gruppe von Brausestrahlaustrittsöffnungen 29a bis 29d abgesperrt oder ganz oder teilweise geöffnet bzw. freigegeben ist. Durch wahlweises Betätigen des einen oder des anderen der beiden Bedienelemente 7a, 8a bzw. Drucktasten kann der Benutzer diese Fluidverbindungen gesteuert ändern und dabei zwischen den verschiedenen möglichen Brausestrahlarten der Handbrause umstellen, und zwar sequentiell und bidirektional sowohl in Vorwärts- als auch in Rückwärtsumschaltrichtung. Da die beiden Bedienelemente 7a, 8a unabhängig voneinander bedienbar und nebeneinander angeordnet sind, wird dem Benutzer eine komfortable, intuitive und funktionsgünstige Bedienfunktionalität zur Verfügung gestellt.

Die Fluidumstellvorrichtung lässt sich, wie gezeigt, sehr kompakt in die Sanitärbrause integrieren, im Fall der Fig. 1 bis 5 in den kompakt gebauten Brausekopf der Handbrause. Im gezeigten Beispiel ist der Umstellkörper 3 mit zu einer Längsmittenachse L_{B} des Brausekopfs paralleler und vorzugsweise identischer Drehachse D_{U} bzw. Längsmittenachse L_{U} positioniert. Als Vorspannelement, das den Umstellkörper 3 axial in Richtung auf den Verteilerkörper 22 elastisch vorspannt, fungiert eine Schraubendruckfeder 34, die sich einerseits gegen den Umstellkörper 3 und andererseits an der Abdeckung 32 innenseitig abstützt, wobei sie von einem Zapfen geführt ist, der von der Innenseite der Abdeckung 32 absteht und in eine oberseitige Aussparung des Umstellkörpers 3 eingreift, in der die Schraubendruckfeder 34 sitzt. Die Abstützbauteile 19a, 19b und die Hülsenführungen 11, 12 sind von entsprechenden Komponenten des Brausekopfs 28 gebildet.

Es versteht sich, dass sowohl die Handbrause der Fig. 1 bis 5 als auch die Fluidumstellvorrichtung der Fig. 6 bis 11 an sich in gegenüber dem gezeigten Beispiel modifizierter Form verwendet werden können. Beispielsweise kann die Fluidumstellvorrichtung alternativ in eine Küchenbrause einer Küchenspüle oder in eine Mischerarmatur für einen Waschtisch, eine Dusche oder eine Badewanneneinrichtung oder in eine Kopf- oder Seitenbrause einer Duscheinrichtung integriert sein. Des Weiteren kann die Fluidumstellvorrichtung je nach Bedarf und Anwendungsfall so konfiguriert sein, dass ihr Umstellkörper zwischen einer beliebigen Anzahl von drei oder mehr verschiedenen Betriebspositionen umschaltbar ist, wozu es beispielsweise genügt, die Kulissenführung 20 und/oder die Zahnkranzanordnung 17 entsprechend zu modifizieren.

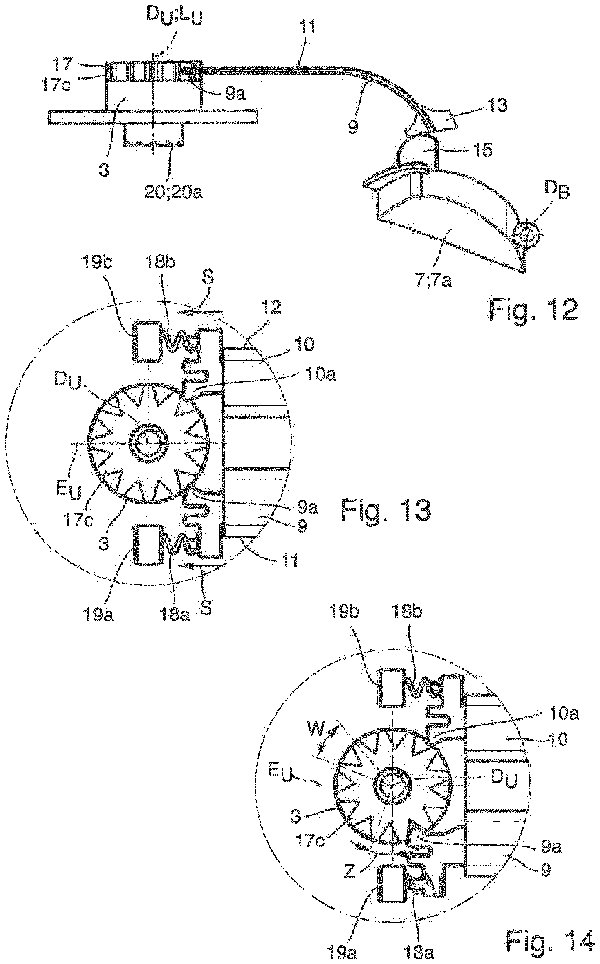

Die Fig. 12 bis 14 zeigen eine Variante der Fluidumstellvorrichtung der Fig. 6 bis 11 mit modifizierter Zahnkranzanordnung 17. In diesem Ausführungsbeispiel beinhaltet die Zahnkranzanordnung 17 einen gemeinsamen Zahnkranz 17c für beide lineare Kraftübertragungselemente 9, 10, die somit in diesem Fall mit ihrem Kopfteil 9a, 10a auf axial gleicher Höhe verlaufen und beide mit dem gemeinsamen Zahnkranz 17c wiederum auf gegenüberliegenden Seiten der die Drehachse D_{U} enthaltenden und zur Schubrichtung S parallelen Längsmittenebene E_{U} des Umstellkörpers 3 zusammenwirken. Statt der sägezahnartigen Zahnprofile der Zahnkränze 17a, 17b im Ausführungsbeispiel der Fig. 6 bis 11 weist der gemeinsame Zahnkranz 17c im Ausführungsbeispiel der Fig. 12 bis 14 ein Zahnprofil mit zu ihrer Längsmittenachse symmetrischen Zahnflanken auf. Da die beiden linearen Kraftübertragungselemente 9, 10 mit ihrem Kopfteil 9a, 10a jeweils außer Eingriff mit dem Zahnkranz 17c sind, wenn sie sich in ihrer zurückgezogenen Ausgangsposition gemäß Fig. 13 befinden, wird die Drehbewegung des Umstellkörpers 3, wenn diese durch die Vorschubbewegung entweder des einen oder des anderen Kraftübertragungselements 9, 10 bewirkt wird, durch das jeweils andere, in der Ausgangsposition verbleibende Kraftübertragungselement 9, 10 nicht gestört.

Bei Bedarf können die linearen Kraftübertragungselemente 9, 10 sowohl im Ausführungsbeispiel der Fig. 6 bis 11 als auch im Ausführungsbeispiel der Fig. 12 bis 14 am Kopfteil 9a, 10a in Querrichtung, d.h. senkrecht zur Schubrichtung S, flexibel bzw. nachgiebig ausgeführt sein, so dass sie quer nach außen ausweichen können, wenn und soweit dies für ihre Rückbewegung von der maximal vorgeschobenen Position in die maximal zurückbewegte Position und/oder zum Ausweichen beim durch das jeweils andere Kraftübertragungselement 9, 10 bewirkten Bewegen des Umstellkörpers 3 erforderlich sein sollte.

Die Betätigungs- bzw. Umstellvorgänge erfolgen für die Ausführungsvariante der Fig. 12 bis 14 in gleicher Weise wie für die Ausführungsvariante der Fig. 6 bis 11, auf deren obige Beschreibung folglich verwiesen werden kann. Wiederum wird der Umstellkörper 3 mittels der einen oder der anderen der beiden Betätigungseinheiten 5, 6 bzw. deren Kraftübertragungselemente 9, 10 so weit gedreht, dass die Kulissenführung 20 mit ihren zusammenwirkenden Kulissenführungselementen 20a, 20b ihre labile Zwischenposition erreicht und geringfügig darüber hinaus gelangt, wonach die Kulissenführung 20 den Umstellkörper 3 vollends in die nächste gewünschte Betriebsposition weiterdreht. Fig. 13 zeigt die Fluidumstellvorrichtung mit den Kraftübertragungselementen 9, 10 in ihrer Ausgangsposition entsprechend Fig. 8, während Fig. 14 die Fluidumstellvorrichtung in ihrer Zwischenposition mit vorgeschobenem Kraftübertragungselement 9 entsprechend Fig. 10 zeigt. Wiederum entspricht der Zahnwinkelabstand w der Zahnkranzanordnung 17 in etwa dem doppelten Zwischendrehwinkel z des Umstellkörpers 3 für das Verdrehen von der momentanen Betriebsposition bis zur labilen Position der Kulissenführung 20 in der Mitte zwischen der gewünschten nächsten und der bisherigen Betriebsposition des Umstellkörpers 3. Dieser Zahnwinkelabstand w entspricht wiederum im Wesentlichen dem Winkelabstand zwischen zwei benachbarten stabilen Positionen der Kulissenführung 20.

Wie die gezeigten und oben erläuterten Ausführungsbeispiele deutlich machen, stellt die Erfindung eine vorteilhafte Fluidumstellvorrichtung und eine vorteilhafte, damit ausgerüstete Sanitärbrause zur Verfügung, wobei sich die Fluidumstellvorrichtung insbesondere dadurch auszeichnet, dass sie relativ kompakt realisiert werden kann und eine sequentiell umschaltende Betätigung des Umstellkörpers bidirektional wahlweise in Vorwärts- und Rückwärtsumschaltrichtung unter Verwendung zweier voneinander unabhängig nutzerbedienbarer Bedienelemente und zugehöriger Betätigungseinheiten für den Umstellkörper ermöglicht.

## Patentansprüche

1. Fluidumstellvorrichtung, insbesondere für eine sanitäre Wasserauslaufarmatur, mit
- mindestens einem Fluideinlass (1) und mindestens zwei Fluidauslässen (2),
- einem beweglichen Umstellkörper (3) zur Steuerung von Fluidverbindungen der mindestens zwei Fluidauslässe mit dem mindestens einen Fluideinlass, wobei der Umstellkörper zwischen mindestens drei verschiedenen Betriebspositionen umschaltbar ist, und
- einer Betätigungseinrichtung (4), die zur sequentiell und bidirektional umschaltenden Betätigung des Umstellkörpers sowohl in einer Vorwärtsumschaltrichtung als auch in einer zur Vorwärtsumschaltrichtung inversen Rückwärtsumschaltrichtung ausgelegt ist,
**dadurch gekennzeichnet, dass**
- die Betätigungseinrichtung (4) eine erste Betätigungseinheit (5) zur sequentiell umschaltenden Betätigung des Umstellkörpers (3) in der Vorwärtsumschaltrichtung und eine zweite Betätigungseinheit (6) zur sequentiell umschaltenden Betätigung des Umstellkörpers in der Rückwärtsumschaltrichtung aufweist und
- die beiden Betätigungseinheiten voneinander unabhängig nutzerbedienbare Bedienelemente (7, 8) umfassen.

2. Fluidumstellvorrichtung nach Anspruch 1, weiter **dadurch gekennzeichnet, dass** die beiden Bedienelemente auf Bediendruck ansprechende Bedienelemente (7a, 8a) sind.

3. Fluidumstellvorrichtung nach Anspruch 1 oder 2, weiter **dadurch gekennzeichnet, dass** die erste Betätigungseinheit ein erstes lineares Kraftübertragungselement (9) und die zweite Betätigungseinheit ein zweites lineares Kraftübertragungselement (10) beinhalten, wobei die beiden Kraftübertragungselemente einerseits mit je einem der beiden Bedienelemente und andererseits mit dem Umstellkörper gekoppelt sind und gegensätzliche Wirkrichtungen auf den Umstellkörper haben.

4. Fluidumstellvorrichtung nach Anspruch 3, weiter **dadurch gekennzeichnet, dass** der Umstellkörper um eine Drehachse (D_{U}) drehbeweglich ist und die Wirkrichtungen der beiden Kraftübertragungselemente auf den Umstellkörper gegensinnige Drehrichtungen (D_{V}, D_{R}) sind.

5. Fluidumstellvorrichtung nach Anspruch 4, weiter **dadurch gekennzeichnet, dass** der Umstellkörper eine Zahnkranzanordnung (17) aufweist, mit der die beiden Kraftübertragungselemente auf bezüglich einer die Drehachse enthaltenden Längsmittenebene (E_{U}) des Umstellkörpers gegenüberliegenden Seiten zusammenwirken, wobei jedes der beiden Kraftübertragungselemente mit der Zahnkranzanordnung jeweils während einer Vorbewegung den Umstellkörper verdrehend in Eingriff ist und während einer der Vorbewegung entgegengesetzten Rückbewegung außer Eingriff ist.

6. Fluidumstellvorrichtung nach Anspruch 5, weiter **dadurch gekennzeichnet, dass**
- die Zahnkranzanordnung einen gemeinsamen Zahnkranz (17c) für beide Kraftübertragungselemente aufweist oder
- die Zahnkranzanordnung einen ersten Zahnkranz (17a) für das erste Kraftübertragungselement und einen gegenüber dem ersten Zahnkranz axial versetzt angeordneten zweiten Zahnkranz (17b) für das zweite Kraftübertragungselement aufweist.

7. Fluidumstellvorrichtung nach Anspruch 6, weiter **dadurch gekennzeichnet, dass** der erste und der zweite Zahnkranz gegensätzliche sägezahnartige Zahnprofile aufweisen.

8. Fluidumstellvorrichtung nach einem der Ansprüche 3 bis 7, weiter **dadurch gekennzeichnet, dass** die Betätigungseinrichtung mindestens ein elastisches Rückstellelement (18a, 18b) aufweist, das eine elastische Rückstellkraft auf das erste und/oder das zweite Kraftübertragungselement in eine Ausgangsposition ausübt.

9. Fluidumstellvorrichtung nach einem der Ansprüche 1 bis 8, weiter **dadurch gekennzeichnet, dass** die Betätigungseinrichtung eine Kulissenführung (20) mit zusammenwirkenden Kulissenführungselementen (20a, 20b) am Umstellkörper einerseits und an einem gegenüber dem Umstellkörper stationären Teil (21) der Fluidumstellvorrichtung andererseits umfasst, wobei die Kulissenführungselemente relativ zueinander zwischen stabilen Positionen beweglich sind, welche die Betriebspositionen des Umstellkörpers definieren.

10. Fluidumstellvorrichtung nach einem der Ansprüche 1 bis 9, weiter **dadurch gekennzeichnet, dass** die Betätigungseinrichtung zur Erzeugung eines betätigungsmeldenden Schaltgeräusches bei Betätigung des jeweiligen Bedienelementes und entsprechender Änderung der Betriebsposition des Umstellkörpers eingerichtet ist.

11. Sanitärbrause mit
- einem Brausegehäuse (26) mit einem Brauseeinlass (27) und einem Brausekopf (28), der mindestens zwei strömungstechnisch parallele Gruppen von Brausestrahlaustrittsöffnungen (29) aufweist, und
- einer Fluidumstellvorrichtung nach einem der Ansprüche 1 bis 10 zur Steuerung der Fluidzuführung vom Brauseeinlass zu den strömungstechnisch parallelen Gruppen von Brausestrahlaustrittsöffnungen.

12. Sanitärbrause nach Anspruch 11, wobei der Umstellkörper im Brausekopf angeordnet ist und die voneinander unabhängig nutzerbedienbaren Bedienelemente zueinander benachbart am Brausegehäuse angeordnet sind.

## Claims

1. Fluid switch-over device, preferably for a sanitary water discharge faucet, comprising
- at least one fluid inlet (1) and at least two fluid outlets (2),
- a movable switch-over body (3) for controlling fluid connections of the at least two fluid outlets to the at least one fluid inlet, wherein the switch-over body is switchable between at least three different operating positions, and
- an actuation device (4), configured for sequential and bidirectional switching-over actuation of the switch-over body both in a forward switch-over direction and in a backward switch-over direction inverse to the forward switch-over direction, **characterized in that**
- the actuation device (4) comprises a first actuation unit (5) for sequential switching-over actuation of the switch-over body (3) in the forward switch-over direction and a second actuation unit (6) for sequential switching-over actuation of the switch-over body in the backward switch-over direction, and
- the two actuation units comprise operating elements (7, 8) that are user-operable independently of each other.

2. Fluid switch-over device according to claim 1, further **characterized in that** the two operating elements are operating elements (7a, 8a) responding to operating pressure.

3. Fluid switch-over device according to claim 1 or 2, further **characterized in that** the first actuation unit includes a first linear force transmission element (9) and the second actuation unit includes a second linear force transmission element (10), wherein the two force transmission elements are coupled, on the one hand, to a respective one of the two operating elements and, on the other hand, to the switch-over body and have opposite directions of action on the switch-over body.

4. Fluid switch-over device according to claim 3, further **characterized in that** the switch-over body is rotatably movable about a rotation axis (Du) and the directions of action of the two force transmission elements on the switch-over body are opposed directions of rotation (D_{V}, D_{R}).

5. Fluid switch-over device according to claim 4, further **characterized in that** the switch-over body comprises a sprocket arrangement (17) and the two force transmission elements cooperate therewith on opposite sides in relation to a central longitudinal plane (E_{U}) including the rotation axis of the switch-over body, wherein each of the two force transmission elements is in engagement with the sprocket arrangement during a forward movement of the switch-over body for rotating and is in disengagement during a backward movement opposite to the forward movement.

6. Fluid switch-over device according to claim 5, further **characterized in that**
- the sprocket arrangement comprises a common sprocket (17c) for both force transmission elements, or
- the sprocket arrangement comprises a first sprocket (17a) for the first force transmission element and a second sprocket (17b) for the second force transmission element, said second sprocket being axially offset in relation to the first sprocket.

7. Fluid switch-over device according to claim 6, further **characterized in that** the first sprocket and the second sprocket have opposed sawtooth-type toothed profiles.

8. Fluid switch-over device according to any one of claims 3 to 7, further **characterized in that** the actuation device comprises at least one elastic return element (18a, 18b) exerting an elastic return force on the first and/or the second force transmission elements towards an initial position.

9. Fluid switch-over device according to any one of claims 1 to 8, further **characterized in that** the actuation device comprises a sliding guide mechanism (20) with cooperating sliding guide elements (20a, 20b) on the switch-over body, on the one hand, and on a part (21) of the fluid switch-over device that is stationary in relation to the switch-over body, on the other hand, wherein the sliding guide elements are movable relative to each other between stable positions, which define the operating positions of the switch-over body.

10. Fluid switch-over device according to any one of claims 1 to 9, further **characterized in that** the actuation device is configured for generating a switch-over sound for signaling actuation upon actuation of the respective operating element and corresponding change of the operating position of the switch-over body.

11. Sanitary shower device, comprising
- a shower housing (26) having a shower inlet (27) and a shower head (28) including at least two groups of shower jet output openings (29) arranged fluidically in parallel, and
- a fluid switch-over device according to any one of claims 1 to 10 for controlling fluid supply from the shower inlet to the fluidically in parallel arranged groups of shower jet output openings.

12. Sanitary shower device according to claim 11, wherein the switch-over body is disposed within the shower head, and the operating elements, that are user-operable independently of each other, are disposed mutually adjacent on the shower housing.

## Revendications

1. Dispositif de commutation de fluide, en particulier pour une robinetterie sanitaire d'écoulement d'eau, comportant
- au moins une entrée de fluide (1) et au moins deux sorties de fluide (2),
- un corps de commutation mobile (3) pour commander des liaisons fluidiques desdits au moins deux sorties de fluide avec ladite au moins une entrée de fluide, le corps de commutation étant commutable entre au moins trois positions de fonctionnement différentes, et
- un moyen d'actionnement (4) qui est conçu pour l'actionnement de commutation séquentielle et bidirectionnelle du corps de commutation aussi bien dans une direction de commutation avant que dans une direction de commutation arrière qui est inverse par rapport à la direction de commutation avant,
**caractérisé en ce que**
- le moyen d'actionnement (4) comporte une première unité d'actionnement (5) pour l'actionnement de commutation séquentielle du corps de commutation (3) dans la direction de commutation avant, et une seconde unité d'actionnement (6) pour l'actionnement de commutation séquentielle du corps de commutation dans la direction de commutation arrière, et
- les deux unités d'actionnement comprennent des éléments de commande (7, 8) pouvant être commandés par l'utilisateur indépendamment l'un de l'autre.

2. Dispositif de commutation de fluide selon la revendication 1, **caractérisé en outre en ce que** les deux éléments de commande sont des éléments de commande (7a, 8a) qui réagissent à une pression de commande.

3. Dispositif de commutation de fluide selon la revendication 1 ou 2, **caractérisé en outre en ce que** la première unité d'actionnement comprend un premier élément de transmission de force linéaire (9), et la seconde unité d'actionnement comprend un second élément de transmission de force linéaire (10), les deux éléments de transmission de force étant couplés chacun d'une part à l'un des deux éléments de commande et d'autre part au corps de commutation et ayant des directions d'action opposées sur le corps de commutation.

4. Dispositif de commutation de fluide selon la revendication 3, **caractérisé en outre en ce que** le corps de commutation est mobile en rotation autour d'un axe de rotation (D_{U}), et les directions d'action des deux éléments de transmission de force sur le corps de commutation sont des directions de rotation (Dv, D_{R}) en sens opposés.

5. Dispositif de commutation de fluide selon la revendication 4, **caractérisé en outre en ce que** le corps de commutation comprend un ensemble de couronne dentée (17) avec lequel les deux éléments de transmission de force coopèrent sur des côtés opposés l'un à l'autre par rapport à un plan médian longitudinal (Eu), contenant l'axe de rotation, du corps de commutation, chacun des deux éléments de transmission de force étant en engagement avec l'ensemble de couronne dentée de manière à faire tourner le corps de commutation pendant un mouvement vers l'avant, et étant en désengagement pendant un mouvement vers l'arrière opposé au mouvement vers l'avant.

6. Dispositif de commutation de fluide selon la revendication 5, **caractérisé en outre en ce que**
- l'ensemble de couronne dentée comprend une couronne dentée commune (17c) pour les deux éléments de transmission de force, ou
- l'ensemble de couronne dentée comprend une première couronne dentée (17a) pour le premier élément de transmission de force et une seconde couronne dentée (17b) pour le second élément de transmission de force, qui est décalée axialement par rapport à la première couronne dentée.

7. Dispositif de commutation de fluide selon la revendication 6, **caractérisé en outre en ce que** les première et seconde couronnes dentées présentent des profils de dents en forme de dents de scie opposées.

8. Dispositif de commutation de fluide selon l'une des revendications 3 à 7, **caractérisé en outre en ce que** le moyen d'actionnement comprend au moins un élément de rappel élastique (18a, 18b) exerçant sur le premier et/ou sur le second élément de transmission de force une force de rappel élastique vers une position initiale.

9. Dispositif de commutation de fluide selon l'une des revendications 1 à 8, **caractérisé en outre en ce que** le moyen d'actionnement comprend un guidage en coulissement (20) comportant des éléments guidés en coulissement (20a, 20b) coopérants sur le corps de commutation d'une part et sur une partie (21), stationnaire par rapport au corps de commutation, du dispositif de commutation de fluide d'autre part, les éléments guidés en coulissement étant mobiles l'un par rapport à l'autre entre des positions stables définissant les positions de fonctionnement du corps de commutation.

10. Dispositif de commutation de fluide selon l'une des revendications 1 à 9, **caractérisé en outre en ce que** le moyen d'actionnement est conçu pour générer un bruit de commutation indiquant un actionnement lors de l'actionnement de l'élément de commande respectif et lors du changement correspondant de la position de fonctionnement du corps de commutation.

11. Douche sanitaire comportant
- un boîtier de douche (26) ayant une entrée de douche (27) et un pommeau de douche (28) qui présente au moins deux groupes d'ouvertures de sortie de jet de douche (29) fluidiquement parallèles, et
- un dispositif de commutation de fluide selon l'une des revendications 1 à 10 pour commander l'alimentation en fluide de l'entrée de douche vers les groupes d'ouvertures de sortie de jet de douche fluidiquement parallèles.

12. Douche sanitaire selon la revendication 11, dans laquelle le corps de commutation est disposé dans le pommeau de douche, et les éléments de commande pouvant être commandés par l'utilisateur indépendamment l'un de l'autre sont disposés de manière adjacente l'un à l'autre sur le boîtier de douche.
